# EUROPÄISCHE PATENTANMELDUNG

(11) **EP 4 847 244 A1**
(43) Veröffentlichungstag der Anmeldung: **02.12.2026**
(21) Anmeldenummer: 26181285.3
(22) Anmeldetag: 27.05.2026
(51) Int. Cl.: B32B 13/14, A62C 3/00, A62C 3/06, A62C 3/07, A62C 3/16, B65D 90/02, B65D 90/22, C04B 28/30, A62C 2/00, A62C 99/00, B32B 5/02, B32B 5/18, B32B 13/00

(54) **QUARANTÄNEBEHÄLTER ZUM AUFNEHMEN VON BRENNBAREN GEFAHRGÜTERN**

(30) Priorität: 27.05.2025 DE 102025120761
(71) Anmelder: Ellermann Eurocon GmbH, 27751 Delmenhorst (DE)
(72) Erfinder: Ellermann, Wenzeslaus, 27751 Delmenhorst (DE); Ellermann, Tobias, 27751 Delmenhorst (DE)
(74) Vertreter: Eisenführ Speiser

(57) **Zusammenfassung**

Die Erfindung bezieht sich auf einen Quarantänebehälter (10, 10'), insbesondere Abrollbehälter, Absetzbehälter oder ISO-Container, zum Aufnehmen von brennbaren Gefahrgütern, mit einer Behälterwandung (12, 12'), die einen Aufnahmebereich (14, 14') für das Gefahrgut definiert, wobei die Behälterwandung (12, 12') eine verschließbare Behälteröffnung (16) als Zugang zum Aufnahmebereich (14, 14') aufweist, wobei die Behälterwandung (12, 12') innenseitig mindestens teilweise, vorzugsweise vollständig, mit einem nicht brennbaren und hochfeuerhemmenden Verbundwerkstoff (80) ausgekleidet ist, und wobei der Verbundwerkstoff (80) folgende Komponenten umfasst:
i) eine kontinuierliche Phase (82) umfassend oder bestehend aus Magnesiumzement, und
ii) ein oder mehrere mit der kontinuierlichen Phase (82) verbundene Materialien ausgewählt aus der Gruppe bestehend aus Fasern, Gewebe (84) und Schaumpartikeln (86).

## Beschreibung

Die Erfindung bezieht sich auf einen Quarantänebehälter, insbesondere Abrollbehälter, Absatzbehälter oder ISO-Container, zum Aufnehmen von brennbaren Gefahrgütern, mit einer Behälterwandung, die einen Aufnahmebereich für das Gefahrgut definiert, wobei die Behälterwandung eine verschließbare Behälteröffnung als Zugang zum Aufnahmebereich aufweist.

Im Stand der Technik sind derartige Quarantänebehälter zum Aufnehmen von Gefahrgütern, wie beispielsweise von Elektrofahrzeugen oder elektrischen Speicherzellen von Elektrofahrzeugen, bekannt. Die Gefahrgüter können gelagert und/oder transportiert werden. Zudem werden mittels der bekannten Behälter während der Lagerung und des Transports mögliche an dem Gefahrgut austretende Gefahrstoffe innerhalb des Behälters zurückgehalten. Aus DE 20 2019 104 504 U1 ist beispielsweise ein solcher Behälter bekannt.

Mit der steigenden Bedeutung der Elektromobilität nimmt die Verbreitung von Fahrzeugen mit elektrischen Speicherzellen im Verkehr immer mehr zu und damit auch die Notwendigkeit der Herstellung, Lagerung und Wartung solcher Fahrzeuge und/oder Speicherzellen.

Es besteht der Bedarf, Speicherzellen im verbauten oder auch unverbauten Zustand zwischenzulagern, oder solche Speicherzellen, die Im Verdacht eines Defekts stehen und dadurch ggf. brandgefährdet sind, zu isolieren und zu beobachten, d.h. unter Quarantäne zu stellen.

Neben dem Transport stellt damit auch die zumindest zeitweise (Zwischen-)Lagerung derartiger Gefahrgüter gewisse Herausforderungen dar, da in gewerblichen Umgebungen, gerade in herstellenden Betrieben, oft nur ein begrenztes Platzangebot besteht, das effektiv genutzt werden will. Die Quarantänebehälter können in der betrieblichen Praxis daher oftmals nur in vergleichsweise geringen Abständen nebeneinander oder neben anderen Gegenständen bzw. Gebäudeteilen untergebracht werden. Mit Blick auf die Sicherheitsanforderungen an solche betrieblichen Umgebungen und des nicht unerheblichen Gefährdungspotentials der Gefahrgüter in einem Brandfall kann es ein Nachteil bzw. eine Herausforderung sein, das Übergreifen des Brandes, Austreten gesundheitsgefährdender Gase und andere nachteilige Auswirkungen von dem Quarantänebehälter auf die Umgebung zu managen.

In Umgebungen, die eine Lagerung des Quarantänebehälters auf einem Außengelände ermöglicht, stellt sich die Herausforderung, dass der Quarantänebehälter Umwelteinflüssen, insbesondere Sonneneinstrahlung und Temperaturschwankungen, ausgesetzt ist.

Der Erfindung lag daher die Aufgabe zugrunde, einen Quarantänebehälter zum Aufnehmen von brennbaren Gütern anzugeben, der die Herausforderungen des Standes der Technik möglichst weitgehend meistert und die im Stand der Technik bekannten Nachteile möglichst weitgehend überwindet. Insbesondere lag der Erfindung die Aufgabe zugrunde, einen Quarantänebehälter bereitzustellen, der sowohl in Innenbereichen wie auch in Außenbereichen uneingeschränkt einsetzbar ist, und selbst im Brandfall innerhalb des Quarantänebehälters Störungen der Behälterumgebung möglichst geringhält.

Bisherige Überlegungen aus dem Stand der Technik gehen in der Regel von einer Ausgestaltung der Behälterwandung des Quarantänebehälters in Form eines "Korpus aus Edelstahl" aus, vgl. DE 102020129677 A1. DE 102020129677 A1 befasst sich zudem mit dem Einsatz von Löschgranulat auf Silizium-Basis zur Feuerunterdrückung.

Erste Überlegungen hinsichtlich einer mehrschichtigen Schutzhülle eines Quarantänebehälters werden in WO 23031268 A1 angestellt. Die dort beschriebene komplexe laminare Struktur der Schutzhülle ist jedoch sehr aufwendig und umfasst insgesamt mindestens acht unterschiedliche Materialtypen.

In EP 4279148 A1 wird ein Löschsystem für ein havariertes Fahrzeug, insbesondere für ein Fahrzeug mit Akkumulatoren, beschrieben, welches eine Löschhaube umfasst, die bevorzugt wenigstens einen textilen Bereich mit einem feuerfesten Vliesmaterial aufweist.

Die bekannten Systeme aus dem Stand der Technik vermögen die anspruchsvolle Aufgabe der vorliegenden Erfindung bisher nicht zu lösen.

Die Erfindung löst die ihr zugrundeliegende vielschichtige Aufgabe bei einem Quarantänebehälter, insbesondere einem Abrollbehälter, Absetzbehälter oder Iso-Container, zum Aufnehmen von brennbaren Gefahrgütern mit den Merkmalen von Anspruch 1. Insbesondere ist vorgesehen, dass die Behälterwandung innenseitig mindestens teilweise, vorzugsweise vollständig, mit einem nicht brennbaren, vorzugsweise zumindest hochfeuerhemmenden Verbundwerkstoff ausgekleidet ist, wobei der Verbundwerkstoff folgende Komponenten umfasst: i) eine kontinuierliche Phase, umfassend oder bestehend aus Magnesiumzement, und ii) ein oder mehrere mit der kontinuierlichen Phase verbundene Materialien, ausgewählt aus der Gruppe, bestehend aus Fasern, Gewebe und Schaumpartikeln.

Erfindungsgemäß wird hier der Ansatz verfolgt, dass die innenseitige Auskleidung der Behälterwandung mit dem Verbundwerkstoff, wie in den Ansprüchen und im vorliegenden Text definiert, anders als im Stand der Technik nicht (bloß) anstrebt, solche Brände im Inneren des Behälters möglichst zu unterdrücken oder möglichst schnell zu löschen, sondern stattdessen die nach außen dringende Wärmeenergie möglichst zu limitieren. Damit wird zugleich erreicht, dass der Quarantänebehälter hinsichtlich der Vermeidung des Auftretens von Brandfällen außerhalb des Behälters, etwa der Vermeidung des Übergreifens des Brandes auf einen benachbart angeordneten Behälter oder angrenzende Gebäudeteile, oder auch der Beeinträchtigung der Umgebung durch eine starke Hitzeentwicklung auf der Außenhülle des Quarantänebehälters im Falles eines Brandes gegenüber bereits bekannten Quarantänebehältern deutlich verbessert wird, und deutlich geringere Störungen der betrieblichen Umgebung durch die Anwender in Kauf genommen werden müssen.

Das komplexe Anforderungsprofil konnte hierbei durch die geschickte Auswahl eines bisher im Bereich der Quarantänebehälter zum Aufnehmen von entzündlichen und brennbaren Gefahrgütern, wie beispielsweise von Elektrofahrzeugen oder elektrischen Speicherzellen von Elektrofahrzeugen, unbekannten Materials erfüllt werden.

Der in den Ansprüchen und im vorliegenden Text definierte Verbundwerkstoff zeigte überraschenderweise besonders vorteilhafte Eigenschaften in Bezug auf die Feuerbeständigkeit, eine vorteilhaft geringe Wärmeleitfähigkeit von ≤ 0,4 W/mK und ist zudem aufgrund seiner Materialstruktur leicht zu verarbeiten. Der erfindungsgemäß eingesetzte Verbundwerkstoff ist zudem vergleichsweise leicht, mit einer Dichte von weniger als 1,00 g/cm³, mechanisch stabil mit einer Biegefestigkeit von ≥ 5,0 MPa sowie einer Schlagfestigkeit von ≥ 1,0 J/m² und Wasser abweisend bzw. undurchlässig.

Die erfindungsgemäße Ausgestaltung des Verbundwerkstoffs führt zu einer exzellenten Feuerbeständigkeit der Behälterwandung, es handelt sich um ein nicht brennbares, hochfeuerhemmendes Material, wobei der Begriff "nicht brennbar" im Rahmen der vorliegenden Erfindung bedeutet, dass das Material entsprechend der Baustoffklasse A1 nach DIN EN 13501-1 ein nicht brennbares Brandverhalten zeigt, wobei der Begriff "hochfeuerhemmend" im Rahmen der vorliegenden Erfindung bedeutet, dass das Material entsprechend der Feuerwiderstandsklasse EI 60 nach DIN EN 13501-2 eine Feuerwiderstandsdauer von mindestens 60 Minuten aufweist.

Von der vorliegenden Erfindung ebenfalls umfasst ist ein Verbundwerkstoff, welcher die vorstehenden Einstufungen hinsichtlich Brandverhalten und Feuerwiderstandsdauer übertrifft, also beispielsweise auch Ausgestaltungen des Verbundwerkstoffs mit einer Feuerwiderstandsdauer von mindestens 90 bzw. 120 Minuten. Ein Verbundwerkstoff mit einer Feuerwiderstandsklasse F90 ist als feuerbeständig zu bezeichnen, und ein Verbundwerkstoff mit einer Feuerwiderstandsklasse F120 ist auch als hochfeuerbeständig zu bezeichnen.

Durch die exzellente Wärmeisolierung der Behälterwandung kann der erfindungsgemäße Quarantänebehälter vorzugsweise gänzlich auf zusätzliche Kühleinrichtungen verzichten. Jedenfalls besteht ein gegenüber bekannten Quarantänebehältern verringerter Bedarf an Kühlleistung, um die Innentemperatur des Containers selbst bei hohen Außentemperaturen und Sonneneinstrahlung (z.B. in Äquatorialregionen) auf gewünschte Innentemperaturen von bspw. maximal 40 °C einzustellen.

Der Verbundwerkstoff ist leicht bearbeitbar und kann beispielsweise durch Schrauben oder Nieten mit der Behälterwandung verbunden werden. Die erfindungsgemäße innenseitige Auskleidung des Quarantänebehälters erfolgt in der Praxis durch Anbringen einzelner Platten des Verbundwerkstoffs, wobei eine möglichst fugenfreie Auskleidung vorteilhaft ist. Einzelne Plattenelemente können insbesondere durch Verklebung miteinander verbunden werden. Vorzugsweise ist in einer Ausführung entlang der Kantenflächen der Platten des Verbundwerkstoffs zusätzlich eine Ausklinkung oder Aussparung für einen sich überlappenden Verbindungsbereich vorgesehen. Die Verbindungsbereiche der Platten, insbesondere an der Behälterdecke, können durch Stützelemente, wie Stahlstreben, zusätzlich abgefangen oder verstärkt sein.

In einer bevorzugten Ausgestaltung des erfindungsgemäßen Quarantänebehälters ist die Behälterwandung vollständig mit dem Verbundwerkstoff ausgekleidet, d.h. Behälterdecke, Behälterboden und Behälterseitenwände, sowie vorzugsweise die die Behälteröffnung verschließende Tür, Klappe oder dergleichen, weisen eine flächendeckende Auskleidung mit dem Verbundwerkstoff auf.

Der Schichtaufbau der Behälterwandung umfasst vorzugsweise eine Schicht aus Verbundwerkstoff, die innenliegend oder als Zwischenschicht vorgesehen ist. Weiter vorzugsweise weist der Schichtaufbau eine außenliegende Schicht aus Stahl auf. Die Behälterwandung kann jedoch auch weitere Materialien als zusätzliche Schicht umfassen, z.B. eine Holzschicht im Behälterboden. Innenliegend ist erfindungsgemäß als dem Aufnahmeraum zugewandt zu verstehen, während außenliegend erfindungsgemäß als der Umgebung zugewandt zu verstehen ist.

In einer bevorzugten Ausgestaltung des erfindungsgemäßen Quarantänebehälters weist der Verbundwerkstoff eine Materialdicke im Bereich von etwa 3 mm bis 50 mm auf. Insbesondere ist die Materialdicke des Verbundwerkstoffs im Bereich von etwa 4 mm bis 40 mm, bevorzugt im Bereich von etwa 5 mm bis 30 mm. Eine Materialdicke des Verbundwerkstoffs von 12 mm hat sich hinsichtlich des komplexen Anforderungsprofils als ausreichend und besonders vorteilhaft herausgestellt. Überraschenderweise kann also bereits eine vergleichsweise geringe Materialdicke des Verbundwerkstoffs das geschilderte komplexe Anforderungsprofil erfüllen. Materialeinsatz und Raumbedarf sind hierbei vorteilhafterweise gering.

Gemäß einer bevorzugten Weiterbildung ist der Verbundwerkstoff zusätzlich mit einem wasserabweisenden Material wie Silikon, Wachs oder einem Polymer beschichtet und/oder imprägniert.

Bereits ohne diese zusätzliche Beschichtung und/oder Imprägnierung zeichnet sich der erfindungsgemäß eingesetzte Verbundwerkstoff aufgrund seiner Materialzusammensetzung und Verbundstruktur durch eine sehr geringe Wasseraufnahme bzw. Wasserdurchlässigkeit aus. Die dem Verbundwerkstoff innewohnende geringe Wasserdurchlässigkeit, konnte in Experimenten bestätigt werden, in denen der Verbundwerkstoff für einen Zeitraum von 24 Stunden in Wasser getaucht wurde und keinerlei Quellung und anderweitige Verformung zeigte. Bei erfindungsgemäßer innenseitiger Auskleidung des Quarantänebehälters mit dem Verbundwerkstoff entstehen somit bei Wassereinwirkung wie beispielsweise durch wasserhaltige Löschflüssigkeiten im Brandfall oder Luftfeuchtigkeit keine nachteiligen Verformungen, Schrumpfungen etc. Dieser Effekt kann durch eine zusätzliche Beschichtung und/oder Imprägnierung mit einem wasserabweisenden Material wie Silikon, Wachs oder einem Polymer noch gesteigert werden.

Gemäß einer weiteren bevorzugten Weiterbildung umfasst oder besteht der die kontinuierliche Phase des Verbundwerkstoffs bildende Magnesiumzement die folgenden Magnesiumverbindungen:
- Magnesiumoxid und/oder Magnesiumcarbonat und/oder Magnesiumhydroxid,
   und
- eines oder mehrere weitere Magnesiumsalze, vorzugsweise ausgewählt aus der Gruppe bestehend aus Magnesiumsulfat, Magnesiumnitrat, Magnesiumchlorid, Magnesiumiodid und Magnesiumbromid, besonders bevorzugt ausgewählt aus der Gruppe bestehend aus Magnesiumsulfat und Magnesiumnitrat.

Vorzugsweise ist der Magnesiumzement ein Magnesiumsulfatzement, in welchem das eine weitere Magnesiumsalz Magnesiumsulfat ist. Besonders vorzugweise besteht der Magnesiumsulfatzement aus Magnesiumoxid und Magnesiumsulfat und ist ebenso besonders vorzugsweise im Wesentlichen frei von Chlorid Ionen.

Vorgenannte bevorzugte stoffliche Ausgestaltungen der kontinuierlichen Phase umfassend oder bestehend aus Magnesiumzement zeigten sich besonders vorteilhaft hinsichtlich des komplexen Anforderungsprofils in Bezug auf die Feuerbeständigkeit, die Wärmeleitfähigkeit, die Dichte und die mechanische Stabilität.

Gemäß einer bevorzugten Weiterbildung umfasst der Verbundwerkstoff folgende mit der kontinuierlichen Phase verbundene Materialien: Fasern, Gewebe und Schaumpartikel. Es ist hierbei bevorzugt, dass die Schaumstoffpartikel 30% bis 70% vom Gesamtvolumen des Verbundwerkstoffs ausmachen. Weitergehend vorzugsweise sind die Fasern und/oder die Schaumpartikel innerhalb des feuerfesten Verbundwerkstoffs räumlich gleichmäßig (isotrop) verteilt. Diese Materialstruktur hat sich als besonders vorteilhaft hinsichtlich des der Erfindung zugrundeliegenden komplexen Anforderungsprofils gezeigt. Es ist zudem bevorzugt, dass das Gewebe an zwei gegenüberliegenden Außenflächen des Verbundwerkstoffs vollflächig eingearbeitet ist. Hierdurch wird insbesondere eine hohe mechanische Stabilität gewährleistet.

Der grundsätzliche Aufbau des Verbundwerkstoffs, insbesondere die räumliche Verteilung der Einzelkomponenten, lässt sich vom Fachmann relativ einfach anhand eines Querschnitts visuell bestimmen. Aufschluss über die Zusammensetzung und Struktur der Einzelkomponenten erhält der Fachmann mittels fachüblicher Bestimmungsmethoden nach entsprechender Probennahme. Der Fachmann kann hierbei auf gängige analytische Methoden aus der Werkstoffprüfung zurückgreifen; bspw. Strukturanalytik mittels Röntgenbeugung oder Elektronenmikroskopie, chemische Analytik wie Elementaranalyse, Spektroskopie oder Spektrometrie, optische Verfahren zur Bestimmung von Parametern wie Lichtdurchlässigkeit, Reflexion, Brechungsindex oder Fluoreszenz unter Verwendung von Spektralphotometern, Mikroskopen oder Interferometern.

Gemäß einer bevorzugten Weiterbildung sind die Fasern Naturfasern, bevorzugt Pflanzenfasern, besonders bevorzugt Bambusfasern.

Gemäß einer weiteren bevorzugten Weiterbildung besteht das Gewebe aus einem oder mehreren synthetischen Materialien, bevorzugt aus Polyesterfasern, Nylonfasern, Acrylfasern, Glasfasern oder deren Mischungen, besonders bevorzugt ist das Gewebe ein Glasfasergewebe.

Gemäß einer ebenso bevorzugten Weiterbildung bestehen die Schaumpartikel aus einem oder mehreren aufgeschäumten Polymeren, bevorzugt aus expandiertem Polystyrol (EPS) und/oder aus extrudiertem Polystyrol (XPS), besonders bevorzugt aus expandiertem Polystyrol (EPS). Es ist zudem bevorzugt, dass die Schaumpartikel eine sphärische Form mit einem durchschnittlichen Partikeldurchmesser im Bereich von 1 mm bis 3 mm aufweisen.

Gemäß einer bevorzugten Weiterbildung des Quarantänebehälters ist vorgesehen, dass die Behälteröffnung an einer Längsseite des Behälters ausgebildet und durch eine schwenkbar daran angeordnete Tür, vorzugsweise abdichtend, verschließbar ist. Mit dem Vorsehen der Behälteröffnung an einer Längsseite des Behälters ist ein bevorzugt großräumiger Zugang in das Behälterinnere und damit den Aufnahmebereich für das darin zu lagernde und ggf. zu transportierende Gefahrgut geschaffen. Vorzugsweise wird die Behälteröffnung mittels der insbesondere ebenfalls an zumindest einem Abschnitt der Längsseite schwenkbar angeordnete Tür abdichtend verschlossen. Damit wird vermieden, dass mögliche bei einer Verbrennung entstehende Reaktionsprodukte ungehindert aus dem Aufnahmebereich austreten. Ferner ist durch das abdichtende Verschließen der Behälteröffnung auch der Einfluss von möglichen Umwelteinflüssen auf ein im Aufnahmebereich des Quarantänebehälters aufgenommenes Gefahrgutes vermindert.

Vorzugsweise weist die Tür mehrere Türflügel auf, wobei vorzugsweise wenigstens einer der Türflügel aus mehreren Türelementen ausgebildet ist, welche schwenkbar untereinander verbunden sind. Mittels der Ausgestaltung, der die Behälteröffnung verschließenden Tür aus mehreren Türflügeln ist insbesondere der Zugang in den Aufnahmebereich vereinfacht. Durch zumindest das zweiteilige Ausgestalten der Tür ist deren Schwenkbereich an der Längsseite des Behälters um bevorzugt mindestens das halbe Öffnungsmaß der Behälteröffnung verringert. Vorzugsweise wird einer oder jeder Türflügel aus mehreren Türelementen ausgebildet, wobei die Türelemente untereinander über entsprechende Scharnierbänder und ein Türelement mittels mehrerer Scharnierbänder mit der Behälterwandung des Behälters verbunden ist. Vorzugsweise ist die Tür als Falttür mit zwei Türflügeln ausgeführt, wobei jeder Türflügel zwei gelenkig miteinander verbundene Türelemente umfasst.

Eine Weiterbildung des Quarantänebehälters sieht vor, dass die Behälteröffnung und/oder die Tür mit einem Dichtelement für eine fluiddichte Ausgestaltung der Behälteröffnung ausgerüstet ist/sind. Über ein zwischen der Behälteröffnung und/oder der Tür des Behälters angeordnetes Dichtelement ist der abdichtende Verschluss der Behälteröffnung erzielt und insbesondere im Brandfall ein möglicher Austritt von zum Beispiel gasförmigen Verbrennungsprodukten aus dem Behälters behindert. Zum anderen kann über das Dichtelement auch ein in den Aufnahmebereich eingebrachtes Löschmittel innerhalb des Aufnahmebereichs im Behälter zurückgehalten werden. Das Dichtelement ist im Bereich der die Behälteröffnung definierenden Kanten des Behälters und/oder der Tür angeordnet. Bei der Verwendung einer Falttür sind vorzugsweise auch die einzelnen Türelemente untereinander mittels des Dichtelements ausgerüstet. Das Dichtelement ist bevorzugt aus einem flexiblen Material ausgebildet, um bei geschlossener Tür mit den damit in Kontakt stehenden Bauteilen eine wirksame abdichtende Anlage der Behälteröffnung zu ermöglichen.

In einer Ausführungsform des Quarantänebehälters ist der Behälterboden mit einer Auffangwanne zum Aufnehmen von Bindemittel und/oder Flüssigkeiten ausgerüstet, wobei vorzugsweise die Auffangwanne zumindest Bereiche einer Auflagerfläche für das Gefahrgut im Aufnahmebereich definiert. Mithilfe der Auffangwanne können mögliche am Gefahrgut austretende Gefahrstoffe, wie beispielsweise Flüssigkeiten sicher aufgefangen werden, sodass diese mit Öffnen des Behälters nicht unkontrolliert in die Umgebung austreten. Zudem kann in die im Bereich des Behälterbodens ausgebildete Auffangwanne ein Bindemittel eingegeben werden, das mögliche am Gefahrgut austretende Gefahrstoffe wirksam bindet. Damit ist deren Entsorgung aus dem Aufnahmebereich des Behälters vereinfacht. Vorzugsweise wird ein Großteil der Auflagerfläche für das Gefahrgut im Aufnahmebereich durch die Auffangwanne definiert. Vorzugsweise ist mehr als die Hälfte, insbesondere mehr als 4/5 der Auflagerfläche für das Gefahrgut im Aufnahmebereich durch die insbesondere unterhalb der Auflagerfläche ausgebildete Auffangwanne abgedeckt.

Vorzugsweise ist in einer Ausführungsform die Auffangwanne oberhalb des Behälterbodens, der zumindest teilweise aus dem Verbundwerkstoff ausgebildet ist, angeordnet oder die Auffangwanne durch Bereiche des Behälterbodens mindestens teilweise definiert, und/oder die Auffangwanne weist an ihrer Oberseite eine Gitterkonstruktion als Auflagerfläche auf. Mit der separaten Ausgestaltung der Auffangwanne oberhalb des Behälterbodens ist eine strukturell einfache Ausgestaltung der Auffangwanne bewirkt.

Die Auffangwanne, bestehend zumindest aus einem Wannenboden und etwa senkrecht dazu verlaufenden Wannenwänden, kann außerhalb des Behälters unter Verwendung von entsprechenden Plattenteilen vorgefertigt und dann auf dem Behälterboden angeordnet werden. In einer Ausführung ist der Behälterboden zumindest teilweise, vorzugsweise vollständig, mit dem Verbundwerkstoff ausgekleidet. Die Auffangwanne ist insbesondere fluiddicht ausgeführt und im Bereich ihrer die Auflagerfläche für das Gefahrgut ausbildenden Oberseite umlaufend abdichtend mit den zumindest feststehenden Seitenwänden des Behälters verbunden. Über die ist vermieden, dass mögliche aus dem Gefahrgut austretende Gefahrstoffe oder ein möglicherweise in den Behälter eingeleitetes Fluid in nicht die Auffangwanne abgedeckten Bereich unterhalb der Auflagerfläche gelangt.

In einer möglichen Ausgestaltung ist die Auffangwanne zumindest teilweise durch Bereiche des Behälterbodens ausgebildet. Insbesondere der Wannenboden kann beispielsweise aus dem eine Decklage des Behälterbodens bildenden Verbundwerkstoff ausgeführt sein, wobei dies ermöglicht wird, in dem der Verbundwerkstoff wasserdicht ausgeführt ist.

Die Auffangwanne weist vorzugsweise Seitenwände auf, die aus separaten Plattenteilen ausgebildet sind. Die Plattenteile werden vorzugsweise mit der Oberseite des den Behälterboden ausbildenden Verbundwerkstoffs in Kontakt bzw. Anlage gebracht und die Kontaktbereiche vorzugsweise fluidundurchlässig abgedichtet. Zur Ausgestaltung von zumindest den Seitenwänden der Auffangwanne kann beispielsweise ein Metallwerkstoff verwendet werden.

Eine mögliche Weiterbildung der Erfindung sieht vor, dass zur Ausgestaltung der Auflagerfläche eine Gitterkonstruktion an der Oberseite der Auffangwanne angeordnet ist. Mögliche Gefahrstoffe, die an den im Aufnahmebereich des Behälters positionierbaren Gefahrgütern austreten, können die Auflagerfläche für das Gefahrgut ungehindert passieren und in den darunterliegenden Aufnahmeraum der Auffangwanne abgeleitet werden. Die Gitterkonstruktion besteht vorzugsweise aus mehreren nebeneinander anordenbaren Gitterrosten, welche jeweils bevorzugt vollumfänglich von ihrer Unterseite aus durch Abschnitte der Auffangwanne gehalten werden. Um insbesondere einander zugewandte Seitenbereiche aneinander angrenzender Gitterroste aufzunehmen, weist die Auffangwanne eine oder mehrere ihre Aufnahmeöffnung überspannende Halterungen auf.

Gemäß einer bevorzugten Ausführungsform weist der Behälterboden einen die seitlichen Abmessungen begrenzenden Stahlrahmen auf, in den ein oder mehrere Holzplatten als untere Lage eingelegt sind und eine die Oberseite der unteren Lage im Wesentlichen vollflächig abdeckende Decklage aus dem Verbundwerkstoff angeordnet ist. Mithilfe des die seitlichen Abmessungen des Behälterbodens begrenzenden Stahlrahmens erhält der Behälterboden wie auch der gesamte Quarantänebehälter die geforderte Stabilität und Steifigkeit. Mittels der die Unterseite des Behälters definierenden Holzplatten ist am Behälterboden eine stabile Basislage erzeugt, um die auf der Oberseite des Behälterbodens aufzunehmenden Gefahrgüter sicher aufnehmen zu können. In einer Ausführung sind an der Unterseite des Behälterbodens, insbesondere die Holzplatten, als untere Lage des Behälterbodens abstützende, Verstärkungsprofile vorgesehen. Die Verstärkungsprofile können sowohl zwischen den die Längsseiten des Behälters als auch die Stirnseiten des Behälters definierenden Profilkörpern des den Behälterboden einfassenden Stahlrahmens verlaufen. Insbesondere sind die Verstärkungsprofile bevorzugt endseitig mit den Profilkörpern des Stahlrahmens verbunden, insbesondere verschweißt. Insbesondere ein die Stirnseiten miteinander verbindendes Verstärkungsprofil kann aus mehreren Abschnitten ausgebildet sein, welche in die Abstände zwischen mögliche die Längsseiten des Behälters verbindenden Verstärkungsprofilen eingesetzt und mit diesen befestigt werden.

Eine Weiterbildung des Quarantänebehälters sieht vor, dass an der Behälterwandung vorzugsweise einer Seitenwand oder einer/der Tür, mindestens eine Entlüftungsöffnung ausgebildet ist, wobei vorzugsweise die Entlüftungsöffnung im Eintritts- und Austrittsbereich jeweils mit einem luftdurchlässigen Abdeckteil versehen ist. Vorzugsweise ist innerhalb des Durchtrittsbereichs der Entlüftungsöffnung ein Filtermaterial angeordnet. Insbesondere bei Verwendung einer Löscheinrichtung zur Reduktion des Reaktionsvermögens des im Aufnahmebereich des Behälters positionierbaren Gefahrguts genügen Lüftungsöffnungen an den feststehenden Seitenwänden oder einem der Türflügel, insbesondere in einem oberen Drittel der Seitenwände oder Tür, mit einem vergleichsweise geringen Durchtrittsquerschnitt. Zudem können die Eintritts- und Austrittsöffnungen an den Entlüftungsöffnungen durch jeweils ein luftdurchlässiges Abdeckteil ausgerüstet sein. Vorzugsweise sind die Abdeckteile als Kiemenbleche ausgeführt, welche fest mit einer jeweiligen seitlichen Behälterwandung verbunden sind. Innerhalb des Durchtrittsbereichs bzw. -querschnitts der Entlüftungsöffnung ist ein Filtermaterial angeordnet, mittels dem mögliche im Brandfall entstehende Schadstoffe am Austritt in die Umgebung gehindert werden sollen.

Vorzugsweise ist im Aufnahmebereich des Quarantänebehälters eine Löscheinrichtung, vorzugsweise eine Aerosol-Löschanlage, angeordnet und zudem ist im Aufnahmebereich mindestens eine mit der Löscheinrichtung signalübertragend verbundene Brandmelde- und Steuereinheit, welche zumindest einen Brandmelde-Sensor umfasst, angeordnet, wobei vorzugsweise ein oder mehrere im Aufnahmebereich angeordnete Komponenten der Brandmelde- und Steuereinheit mittels einer beliebig reversibel koppel- und entkoppelbaren Verbindung mit einer Rahmenstruktur des Behälters verbindbar sind. Mittels der Löscheinrichtung im Aufnahmebereich, insbesondere einer Aerosol-Löschanlage, kann im Brandfall die chemische Reaktion am im Aufnahmebereich gelagerten Gefahrgut, insbesondere eines darin aufgenommenen Fahrzeug-Akkumulators, insbesondere deren Reaktionsgeschwindigkeit stark gedrosselt werden. Damit ist zum einen die Verbrennungstemperatur im Aufnahmebereich reduziert und zum anderen wird möglichen bei der ablaufenden chemischen Reaktion entstehenden Druckimpulse entgegengewirkt.

Die Löscheinrichtung ist vorzugsweise mit einer Brandmelde- und/oder Steuereinheit signalübertragend verbunden, wobei die Brandmelde- und Steuereinheit zumindest einen Brandmelde-Sensor zur Branderkennung im Aufnahmebereich des Quarantänebehälters umfasst. Mittels des Brandmelde-Sensor ist eine zuverlässige Branderkennung innerhalb des Aufnahmebereichs des Quarantänebehälters gewährleistet. Der Brandmelde-Sensor kann beispielsweise als Temperatur-, Rauch- und/oder Infrarot-Sensor ausgebildet sein. Die Brandmelde- und Steuereinheit ist insbesondere bei Erkennung eines im Aufnahmebereich eintretenden Brandfalls dazu eingerichtet, die Löscheinrichtung anzusteuern bzw. auszulösen. Nach Auslösen der Löscheinrichtung wird der Aufnahmebereich mit einem häufig erst im Brandfall generierten Löschmittel geflutet. Mittels des den Aufnahmebereich flutenden Löschmittels wird zum einen der Luftsauerstoff gebunden und zum anderen wird einem entstandenen Brandherd Wärmeenergie entzogen, wodurch eine Kühlwirkung im Aufnahmebereich des Quarantänebehälters eintritt.

Vorzugsweise sind die ein oder mehreren im Aufnahmebereich angeordneten Komponenten der Brandmelde- und Steuereinheit mittels einer beliebig reversibel koppel- und entkoppelbaren Verbindung mit den Innenseiten der Behälterwandung verbunden, insbesondere mittels einer Klemm- oder Magnetverbindung mit Rahmenteilen einer den Quarantänebehälter definierenden Rahmenstruktur koppelbar. Das Vorsehen einer solch reversibel koppel- und entkoppelbaren Verbindung, die beliebig oft und vor allem einfach hergestellt und wieder aufgehoben werden kann, ermöglicht insbesondere im Falle eines Defekts oder nach einem Brandfall den simplen Austausch einer, mehrerer oder sämtlicher Komponenten der innerhalb des Aufnahmebereichs angeordneten Brandmelde- und/oder Steuereinheit. Innerhalb des Aufnahmebereichs sind beispielsweise Kabelkanäle, ein oder mehrere Brandmelde-Sensoren, wenigstens ein akustischer und/oder optischer Signalgeber und in einer möglichen Ausgestaltung eine innerhalb des Aufnahmebereichs angeordnete Beleuchtungseinheit über die reversibel koppel- und entkoppelbare Verbindung an der Rahmenstruktur des Behälters befestigt. Die reversibel koppel- und entkoppelbare Verbindung ist bevorzugt als Klemm- oder Magnetverbindung ausgeführt.

Eine Weiterbildung des Quarantänebehälters sieht vor, dass der Aufnahmebereich ein erster Raum innerhalb des Behälters ist und zusätzlich ein zweiter Raum in dem Behälter ausgebildet ist, wobei der erste Raum und der zweite Raum durch eine Trennwand voneinander getrennt sind, wobei vorzugweise der zweite Raum über mindestens eine weitere Behälteröffnung an einer die Stirnseite des Behälters definierenden Seitenwand aus zugänglich ist. Vorzugsweise bildet der erste, den Aufnahmebereich für das Gefahrgut definierende Behälterraum den größten Volumenanteil des insbesondere durch die Behälterwandung räumlich begrenzten Behältervolumens. Insbesondere werden mindestens 95% des Behältervolumens durch den Aufnahmebereich für die darin zu lagernden Gefahrgüter definiert. Vorzugsweise ist nur der erste Raum des Behälters durch die an der Längsseite des Behälters ausgebildete Behälteröffnung aus zugänglich. Der zweite Raum, der vorzugsweise vollständig durch die Trennwand vom ersten Raum räumlich getrennt ist, ist insbesondere über die weitere an der Stirnseite des Behälters ausgebildete Behälteröffnung aus zugänglich. Auch diese Behälteröffnung ist wiederum über eine Tür abdichtend verschlossen. In einer möglichen Ausgestaltung umfasst die die Behälteröffnung an der Stirnseite des Behälters verschließende Tür zwei an jeweils den Seitenbereichen der Stirnwand angeschlagenen Türflügeln. Auch die weitere Behälteröffnung ist durch das Türelement bevorzugt vollständig abdichtend verschließbar.

In einer möglichen Ausgestaltung des Quarantänebehälters ist die Trennwand mindestens hochfeuerhemmend ausgeführt, und/oder ist im zweiten Raum mindestens eine der nachfolgenden Komponenten angeordnet: Ein Schaltschrank, eine Brandmelde- und Steuereinheit, zumindest ein Außengerät eines Klimageräts sowie das Außengerät mit dem Aufnahmebereich verbindende Leitungsabschnitte, eine Stromversorgung, ein oder mehrere Anschlüsse für eine externe Stromversorgung, und ein Rohranschluss mit einem sich durch die Trennwand erstreckenden Rohrabschnitt. Die den ersten und den zweiten Raum voneinander trennende Trennwand ist insbesondere auf der den Aufnahmebereich für das Gefahrgut zugewandten Seite wenigstens hochfeuerhemmend ausgeführt, insbesondere mit dem mindestens hochfeuerhemmend ausgebildeten Verbundwerkstoff ausgerüstet bzw. ausgekleidet. Damit soll insbesondere ein Übertritt eines möglichen Brandes vom als Aufnahmebereich für das Gefahrgut ausgebildeten ersten Raum im Behälter in den einen Steuerungs- und Versorgungsraum definierenden, zweiten Raum des Behälters entgegengewirkt werden. Die Trennwand zwischen den beiden Räumen des Behälters ist unter Verwendung des Verbundwerkstoffs mindestens hochfeuerhemmend, insbesondere feuerbeständig, vorzugsweise hochfeuerbeständig nach DIN EN ISO 13501-2 ausgeführt. Die Trennwand erfüllt somit vorliegend die Anforderungen an die Feuerwiderstandsklassen F60, insbesondere F90, und besonders bevorzugt F120.

Zudem sind innerhalb des Behälters eine Reihe von elektrischen Schalteinheiten oder Geräten angeordnet, die bevorzugt vom Aufnahmebereich für das Gefahrgut abgetrennt im zweiten Raum des Behälters angeordnet sind. Damit kann im Brandfall eine unbeeinträchtigte Funktion des Behälters und insbesondere der im Behälter angeordneten Löscheinrichtung gewährleistet werden. Innerhalb des als Steuerungs- und Versorgungsraum ausgebildeten, zweiten Raumes ist zum Beispiel ein Schaltschrank angeordnet, innerhalb dem eine Vielzahl elektrischer und elektronischer Komponenten, aber auch Klemmleisten zum übersichtlichen elektrischen Verbinden der im ersten und zweiten Raum angeordneten elektrischen Komponenten des Behälters angeordnet sind. Neben dem Schaltschrank ist unter anderem auch eine Brandmelde- und Steuereinheit vorgesehen, mittels der über die mit der Brandmelde- und Steuereinheit signalübertragend verbundenen Brandmeldesensoren eine Überwachungsfunktion des Aufnahmebereichs für das Gefahrgut erfolgt. Zum anderen erfolgt mittels der Brandmelde- und Steuereinheit das Auslösen der im Aufnahmebereich für das Gefahrgut angeordneten Löscheinrichtung. In einer bevorzugten Ausführungsform kann mittels der Brandmelde- und Steuereinheit auch die Alarmierung der örtlichen Feuerwehr oder eines zuständigen Wachdienstes vorgenommen werden.

Ferner kann innerhalb des zweiten Raumes zumindest ein Außengerät eines Klimageräts sowie mehrere das Außengerät mit dem im Aufnahmebereich angeordneten Innengerät verbindende Leitungsabschnitte angeordnet sein. Mittels des im Behälter angeordneten Klimageräts, wobei das Außengerät im zweiten Raum und das Innengerät im Aufnahmebereich für das Gefahrgut angeordnet ist, kann innerhalb des als Aufnahmebereich ausgebildeten ersten Raums des Behälters ein unter den außerhalb des Behälters vorherrschenden Umgebungsbedingungen liegendes Temperaturniveau erzeugt werden. Damit ist insbesondere auch im Sommer bei vergleichsweise hohen Temperaturen und einer zusätzlich dauerhaft auf den Behälter einwirkenden Sonneneinstrahlung einer Überhitzung im Aufnahmebereich des Behälters und einer möglichen daraus entstehenden Gefährdung des im Aufnahmebereich gelagerten Gefahrguts entgegengewirkt.

Zudem kann im zweiten Raum ein elektrischer Speicher als Stromversorgung für den Behälter vorgesehen sein, mittels dem eine autarke Grundversorgung des Behälters über einen vorbestimmten Zeitraum während des Transports oder auch der Lagerung möglich ist. Ferner sind im zweiten Raum auch ein oder mehrere Anschlüsse für eine externe Stromversorgung vorgesehen, über die eine netzgebundene Stromversorgung des Behälters möglich ist. Zudem kann über den mindestens einen elektrischen Anschluss im Steuerungs- und Versorgungsraum das Aufladen des darin angeordneten elektrischen Speichers vorgenommen werden. In einer möglichen Ausgestaltung der Erfindung weist der Quarantänebehälter im zweiten Raum mindestens einen Rohranschluss mit einem sich durch die Trennwand erstreckenden Rohrabschnitt auf. Über den somit über den Steuerungs- und Versorgungsraum aus einfach zugänglichen Rohranschluss kann beispielsweise zusätzlich ein Löschfluid, beispielsweise eine Flüssigkeit, in den Aufnahmebereich des Behälters eingeleitet werden. Über den Rohranschluss ist es möglich, den Aufnahmebereich für das Gefahrgut im Behälter zumindest teilweise zu fluten. Gleichzeitig kann der Rohranschluss auch zum anschließenden Entleeren eines mit einem Löschfluid gefluteten Aufnahmebereichs verwendet werden. Vorzugsweise ist in einem Abschnitt des den Rohranschluss mit dem Aufnahmebereich verbindenden Rohrabschnitt ein Absperrelement zum Trennen der fluidleitenden Verbindung zwischen dem Aufnahmebereich und dem zweiten Raum angeordnet.

Gemäß einer bevorzugten Weiterbildung ist im ersten Raum des Behälters mindestens eine den Aufnahmebereich in mehrere Abteile unterteilende Zwischenwand angeordnet, wobei vorzugsweise die Zwischenwand mindestens eine Wandschicht aufweist, welche aus dem hochfeuerhemmenden Verbundwerkstoff ausgeführt ist. Mittels der Zwischenwand im Aufnahmebereich des Behälters können einzelne Gefahrgüter in mehreren voneinander getrennten Abteilen gelagert werden. Mittels der wenigstens einen Zwischenwand erfolgt eine bevorzugt individuelle Unterteilung des ersten Raumes, wobei mittels der einen, den zwei oder mehr Zwischenwänden eine bevorzugt gleichmäßige Aufteilung des Aufnahmebereich in etwa gleichgroße Abteile erfolgt. In Verbindung mit der bevorzugten Ausgestaltung der Zwischenwand aus dem hochfeuerhemmenden Verbundwerkstoff ist bewirkt, dass die bei einem Brand, der an einem in einem separaten Abteil gelagerten Gefahrgut entsteht, entstehende Strahlungswärme eine deutlich reduzierte Wirkung auf ein in einem benachbarten Abteil angeordnetes Gefahrgut hat. Damit ist bestenfalls der Entstehung eines weiteren Brandherdes im Aufnahmeraums des Behälters entgegengewirkt. Vorzugsweise ist mindestens eine Wandschicht der Zwischenwand vollflächig aus dem hochfeuerhemmenden Verbundwerkstoff ausgebildet. In einer möglichen Ausgestaltung besteht die Zwischenwand vollständig aus dem aus einem nicht brennbaren Material ausgebildeten Verbundwerkstoff. In einer bevorzugten Ausführungsform ist der Verbundwerkstoff feuerbeständig, insbesondere hochfeuerbeständig, ausgeführt.

In einer möglichen Ausgestaltung des Quarantänebehälters ist die Zwischenwand entlang mindestens einer ihrer Seitenkanten mit Abstand zum Behälterboden, der Behälterdecke und/oder den Seitenwänden der Behälterwandung angeordnet. Damit ist gewährleistet, dass im Falle nur einer im Quarantänebehälter angeordneten Löscheinrichtung, ein von der Löscheinrichtung ausgegebenes Löschmittel, vorzugsweise ein Aerosol, bevorzugt gleichmäßig in beide Abteile des Aufnahmeraums gelangen kann, um dort die notwendige Löschwirkung zu erzielen. Eine mögliche Ausgestaltung der Erfindung sieht vor, dass bei Einsatz mindestens einer Zwischenwand im Aufnahmebereich in jedem der dadurch definierten Abteile eine jeweils eigene Löscheinrichtung angeordnet ist. Um die mindestens eine Seitenkante mit Abstand zum Behälterboden, der Behälterdecke und/oder den Seitenwänden des Behälters im Aufnahmebereich anordnen zu können, ist die Seitenkante über geeignete Befestigungsmittel, wie beispielsweise Bolzen oder Stäbe, an der Behälterwandung befestigt und insbesondere dauerhaft fest innerhalb des Aufnahmebereichs des Behälters gehalten.

Die Erfindung wird nachfolgend anhand bevorzugter Ausführungsbeispiele unter Bezugnahme auf die beigefügten Figuren näher beschrieben. Hierbei zeigen:
- Fig. 1: eine perspektivische Vorderansicht eines Behälters gemäß einem ersten Ausführungsbeispiel mit einer teilweise geöffneten Behälteröffnung;
- Fig. 2: eine perspektivische Ansicht des Behälters nach Fig. 1 mit vollständig geöffneter Behälteröffnung;
- Fig. 3: eine Ansicht des Aufnahmebereichs für das Gefahrgut des erfindungsgemäßen Behälters;
- Fig. 4: eine Ansicht auf den Behälterboden und eine oberhalb angeordnete Auffangwanne;
- Fig. 5: eine Ansicht eines oberen Bereichs eines Türelements mit einer Entlüftungsöffnung;
- Fig. 6: eine Teilansicht des Aufnahmebereichs nach Fig. 3;
- Fig. 7: eine perspektivische Ansicht auf einen über eine weitere Behälteröffnung zugänglichen vom Aufnahmebereich für das Gefahrgut abgetrennten, zweiten Raum im Behälter;
- Fig. 8: eine Ansicht eines Wandbereichs der Behälterwandung, insbesondere ein Türelement, mit einem auf der Innenseite angeordneten Verbundwerkstoff;
- Fig. 9: eine perspektivische Ansicht des innenseitig angeordneten Verbundwerkstoffs;
- Fig. 10 und 11: Ansichten eines zweiten Ausführungsbeispiels eines erfindungsgemäßen Behälters, und
- Fig. 12: eine Draufsicht auf eine weitere Ausführungsform eines erfindungsgemäßen Behälters.

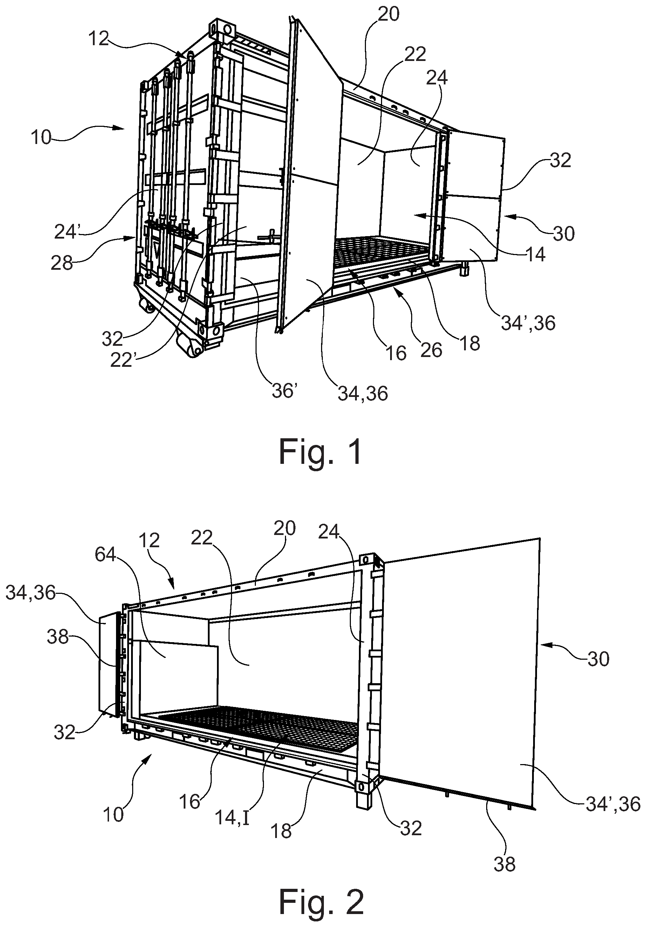

Fig. 1 zeigt einen Quarantänebehälter 10, vorliegend einen 20 Fuß Iso-Container, zum Aufnehmen von brennbaren Gefahrgütern. Der Quarantänebehälter 10 weist eine Behälterwandung 12 auf, die einen Aufnahmebereich 14 für das darin lagerbare oder transportierbare Gefahrgut definiert. Die Behälterwandung 12 weist eine verschließbare Behälteröffnung 16 als Zugang zum Aufnahmebereich 14 auf. Der Quarantänebehälter 10 weist einen Behälterboden 18, eine Behälterdecke 20 und mehrere sich im Wesentlichen senkrecht zwischen dem Behälterboden 18 und der Behälterdecke 20 erstreckende Seitenwände 22, 22', 24, 24' auf. Der Behälterboden 18, die Behälterdecke 20 und die Seitenwände 22-24' bilden vorliegend die Behälterwandung 12 aus. Die Seitenwände 22, 22' definieren vorliegend die Längsseiten 26 und die Seitenwände 24, 24' die Stirnseiten des Quarantänebehälters 10.

Die Behälteröffnung 16 ist vorliegend an einer der Längsseiten 26 des Behälters 10, insbesondere der Seitenwand 22' ausgebildet. Die Behälteröffnung 16 ist durch eine schwenkbar daran angeordnete Tür 30 verschließbar ausgebildet, insbesondere abdichtend verschließbar. Die Tür 30, welche vorliegend als Falttür ausgebildet ist, weist zwei Türflügel 34, 34' auf, welche an entgegengesetzten Enden 32, 32' der Längsseite 26 beweglich gelagert sind. Jeder Türflügel 34, 34' wird aus zwei gelenkig miteinander verbundenen Türelementen 36, 36' ausgebildet.

In einer Ausgestaltung ist die Behälteröffnung 16 und/oder die Tür 30 mit einem Dichtelement 38 für eine fluiddichte Ausgestaltung der Behälteröffnung 16 ausgerüstet. In der vorliegend gezeigten Ausführung sind die Dichtelemente 38 an den Türflügeln 34, 34', insbesondere den jeweiligen Türelementen 36, 36' angeordnet. Wie aus Fig. 2 ersichtlich, ist die Tür 30 am Quarantänebehälter 10 derart ausgebildet, dass diese im geöffneten Zustand die Längsseite 26 des Behälters als Zugang in den Aufnahmebereich 14 vollständig freigibt.

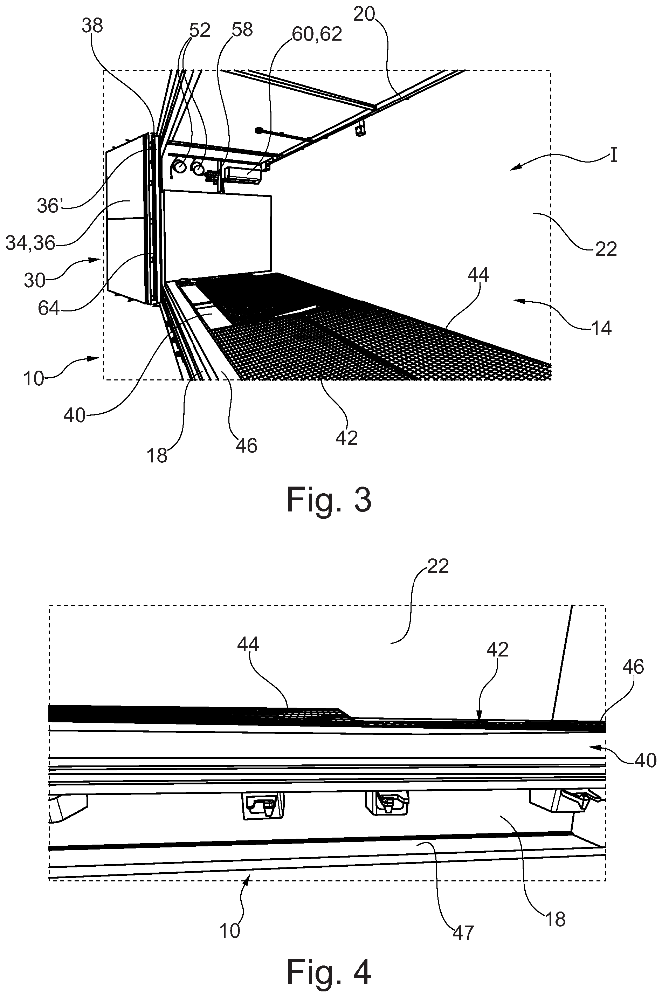

Wie ferner aus Fig. 2 in Verbindung mit Fig. 3 ersichtlich, ist der Quarantänebehälter 10 mit einer bodenseitigen Auffangwanne 40 ausgerüstet. Die Auffangwanne 40 ist zum Aufnehmen von Bindemittel und/oder möglichen aus dem Gefahrgut austretenden Gefahrstoffen, wie beispielsweise Flüssigkeiten, eingerichtet. Die Auffangwanne 40 bildet vorliegend zumindest Bereiche einer Auflagerfläche 42 für das im Aufnahmebereich angeordnete bzw. gelagerte Gefahrgut aus. Vorliegend wird die Auflagerfläche 42 durch eine die Oberseite 43 der die Auffangwanne 40 definierenden Gitterkonstruktion 44 ausgebildet. Wie aus Fig. 3 erkennbar, bildet die Auffangwanne 40 einen Großteil der Auflagerfläche 42 für das Gefahrgut aus.

Wie insbesondere aus den Figuren 3 und 4 zu entnehmen, sind die Randbereiche 46 der Auflagerfläche 42 geschlossen ausgeführt und insbesondere in Richtung der feststehenden Seitenwände 22, 24 der Behälterwandung 12 abgedichtet. Wie ferner aus den Figuren ersichtlich, ist die Auffangwanne 40 oberhalb des Behälterbodens 18 angeordnet. Die Auffangwanne 40 ist in der vorliegend gezeigten Ausführung ein separat ausgebildetes Bauteil, das aus mehreren untereinander verbundenen, nicht näher dargestellten Plattenteilen ausgebildet ist. In einer nicht näher gezeigten Ausführung ist die Auffangwanne zumindest teilweise in den Behälterboden 18 integriert, wobei die Unterseite der Auffangwanne durch Bereiche des Behälterbodens selbst ausgebildet sein kann.

In einer Ausgestaltung weist der Behälterboden 18 einen die seitlichen Abmessungen begrenzenden Stahlrahmen 47 aufweist, in den ein oder mehrere nicht näher gezeigte Holzplatten als eine untere Lage eingelegt und eine die Oberseite der unteren Lage im Wesentlichen vollflächig abdeckende Decklage aus dem Verbundwerkstoff 80 angeordnet ist.

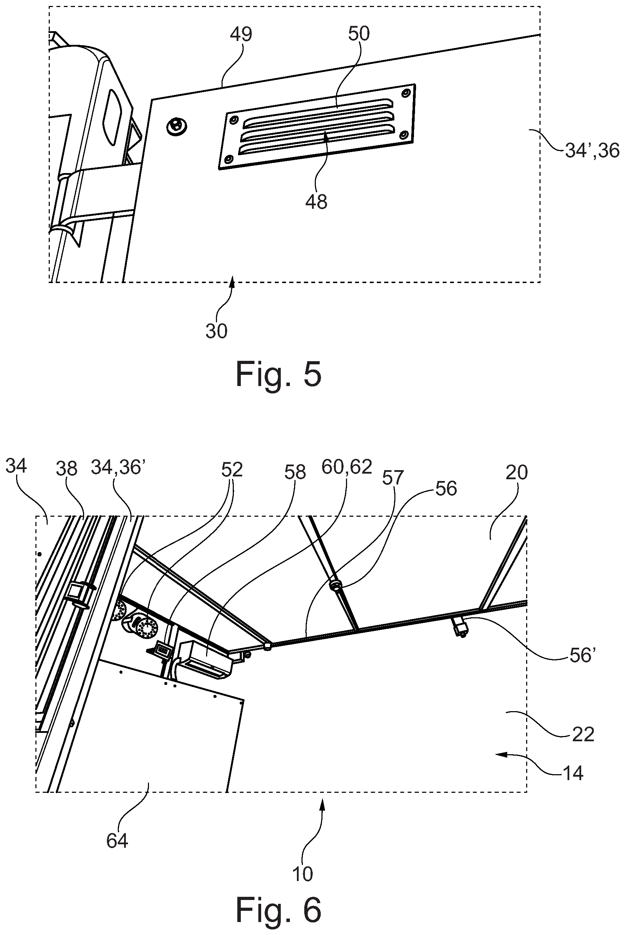

Wie Fig. 5 verdeutlicht, ist an der Behälterwandung 12, insbesondere einer Seitenwand 22-24', bevorzugt einer als Tür 30 ausgebildeten Seitenwand 22' mindestens eine Entlüftungsöffnung 48 vorgesehen. Die Entlüftungsöffnung 48 ist vorliegend in einem oberen Drittel der Seitenwand 22' angeordnet, insbesondere unmittelbar benachbart zu einer Oberkante 49 der Seitenwände 22-24'. Die Entlüftungsöffnung 48 ist im Eintritts- und/oder Austrittsbereich mit einem luftdurchlässigen Abdeckteil 50 ausgerüstet, welches als Kiemenblech ausgebildet sein kann. Innerhalb des nicht sichtbaren Durchtrittsbereichs der Entlüftungsöffnung 48 ist ein Filtermaterial angeordnet.

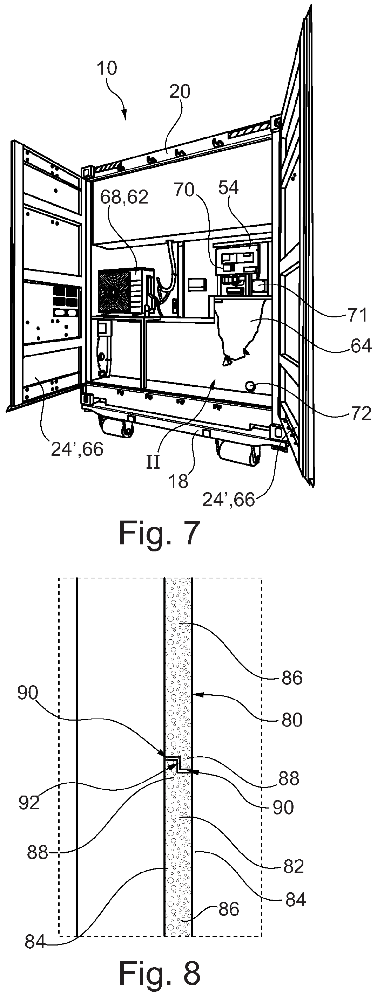

Wie ferner aus den Figuren 3 und 6 ersichtlich, ist im Aufnahmebereich 14 des Quarantänebehälters 10 eine Löscheinrichtung 52, vorzugsweise eine Aerosol-Löschanlage, angeordnet. Ferner sind innerhalb des Aufnahmebereichs 14 neben der Löscheinrichtung 52 verschiedene, mit einer in Fig. 7 gezeigten Brandmelde- und Steuereinheit 54 signalleitend verbundene Komponenten, wie beispielsweise mehrere Brandmeldesensoren 56, 56', eine mit einem Bewegungsmelder 57 gekoppelte Beleuchtungseinheit 58 sowie ein Innengerät 60 eines Klimageräts 62 angeordnet.

Wie aus den Figuren 2, 3 und 7 ersichtlich, weist der Quarantänebehälter 10 einen den Aufnahmebereich 14 definierenden ersten Raum I und zusätzlich einen, einen Steuerungs- und Versorgungsraum definierenden, zweiten Raum II (Fig. 7) auf. Der erste Raum I und der zweite Raum II sind durch eine Trennwand 64 voneinander getrennt. Die Trennwand 64 unterteilt die beiden Räume I, II zumindest räumlich und in einer bevorzugten Ausführungsform auch abdichtend voneinander. Der zweite Raum II ist über eine weitere Behälteröffnung 16' in der als Tür 66 ausgebildeten Seitenwand 24' an der Stirnseite 28 des Behälters 10 aus zugänglich. Der zweite Raum II weist ein Raumvolumen auf, das im Vergleich zum Raumvolumen des als ersten Raum I ausgebildeten Aufnahmebereichs 14 nur einem Bruchteil entspricht.

Zusätzlich zu der Brandmelde- und Steuereinheit 54 ist im zweiten Raum II ein Außengerät 68 des Klimageräts 62, ein Schaltschrank 70, ein oder mehrere Anschlüsse 71 für eine externe Stromversorgung und mindestens ein Rohranschluss 72 mit einem sich durch die Trennwand 64 erstreckenden Rohrabschnitt angeordnet.

In einer Ausführungsform ist, wie aus den Figuren 3, 4, 5 und 8 ersichtlich, die Behälterwandung 12 des Quarantänebehälters 10 innenseitig mindestens teilweise, vorzugsweise vollständig, mit einem nicht brennbaren und zumindest hochfeuerhemmenden Verbundwerkstoff 80 ausgekleidet. In der vorliegend gezeigten Ausführung ist der Behälterboden 18, die Behälterdecke 20 und auch die Seitenwände 22, 22', 24 innenseitig mit dem Verbundwerkstoff 80 ausgerüstet. Auch die den ersten und zweiten Raum I, II trennende Trennwand 64 ist auf ihrem dem Raum I, also dem Aufnahmebereich 14 für das Gefahrgut, zugewandten Flächenbereich mit dem Verbundwerkstoff 80 ausgestattet.

Der Verbundwerkstoff 80 umfasst in einer Ausführung dabei folgende Komponenten: Eine kontinuierliche Phase 82, umfassend oder bestehend aus Magnesiumzement, und ein oder mehrere mit der kontinuierlichen Phase 82 verbundene Materialien, ausgewählt aus der Gruppe, bestehend aus Fasern, Gewebe 84 und Schaumpartikeln 86. Der Verbundwerkstoff 80 weist eine Materialdicke D im Bereich von etwa 3 mm bis 50 mm, bevorzugt im Bereich von etwa 5 mm bis 30 mm, vorliegend im Bereich von 6 mm bis 20 mm, auf. Der bevorzugt als Platten ausgebildete Verbundwerkstoff 80 weist an seinen Randbereichen 88, vorzugsweise umlaufend, eine Ausklinkung 90 auf, wodurch ein sich überlappender Verbindungsbereich 92 erzeugt ist.

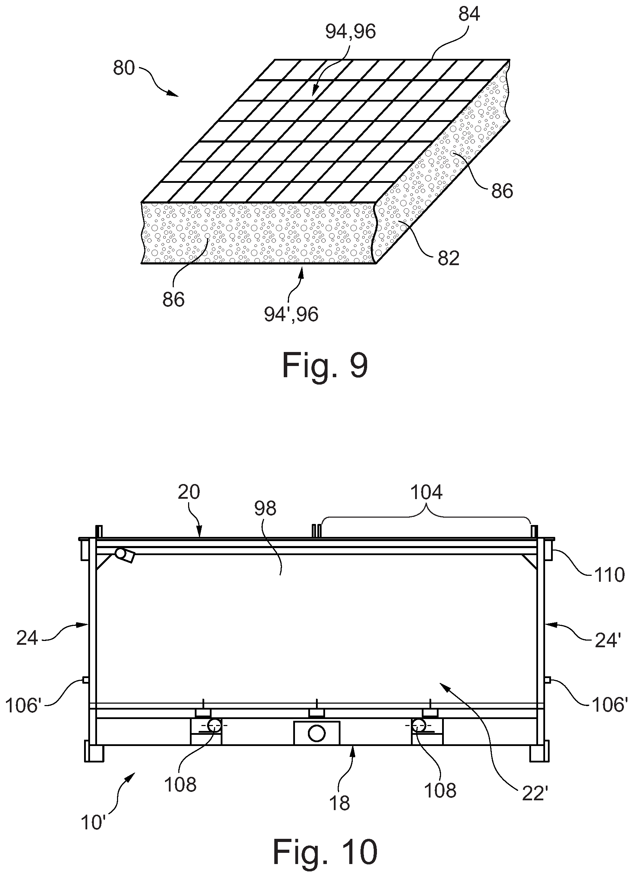

In Fig. 9 ist der Aufbau des Verbundwerkstoffes 80 verdeutlicht. An seiner die Materialdicke D definierenden Ober- und Unterseite 94, 94' kann dieser mit einem wasserabweisenden Material, wie Silikon, Wachs oder polymerbeschichtet oder imprägniert sein. In einer Ausführung bilden die Schaumpartikel 86 etwa 30 bis 70 % des Gesamtvolumens des Verbundwerkstoffes 80 aus. Die Schaumpartikel 86 und mögliche im Verbundwerkstoff 80 enthaltene Fasern sind räumlich gleichmäßig isotop innerhalb des Verbundwerkstoffs 80 verteilt angeordnet.

Das Gewebe 84 ist an der Ober- und Unterseite 94, 94' des Verbundwerkstoffes 80 ausbildenden Außenflächen 96 vollflächig eingearbeitet, insbesondere in die kontinuierliche Phase 82 eingebettet. Die im Verbundwerkstoff 80 angeordneten Fasern können Naturfasern sein, wie beispielsweise Bambusfasern, und das Gewebe 84 im Bereich der Außenflächen 96 besteht aus einem oder mehreren synthetischen Materialien. Die Schaumpartikel 86 werden beispielsweise aus aufgeschäumten Polymeren erzeugt, wie expandiertem oder extrudiertem Polystyrol. Die Schaumpartikel 86 weisen eine sphärische Form mit einer Partikelgröße im Bereich von 1 mm bis 3 mm auf.

Fig. 10 zeigt eine weitere Ausführungsform eines Quarantänebehälters 10' mit einer Behälterwandung 12, die aus einem Behälterboden 18, einer Behälterdecke 20 und Seitenwänden 22-24' gebildet wird und einen Aufnahmebereich 14 für ein im Aufnahmebereich 14 positionierbares Gefahrgut definieren. Der Behälter 10' weist ein bewegliches Klappenteil 98 als Zugang zum Aufnahmebereich 14 auf.

Das Klappenteil 98 ist zwischen einer Schließstellung und einer Offenstellung hin und her bewegbar. Innerhalb des Aufnahmebereichs 14 ist eine Auflagerfläche 42' für das Gefahrgut ausgebildet, welche im Abstand oberhalb des Behälterbodens 18' angeordnet ist. In der in Fig. 10 gezeigten Ausführungsform ist die Auflagerfläche 42' beispielhaft aus mehreren, Gitterrosten 100 gebildet, welche in einer Ebene verlaufend angeordnet sind.

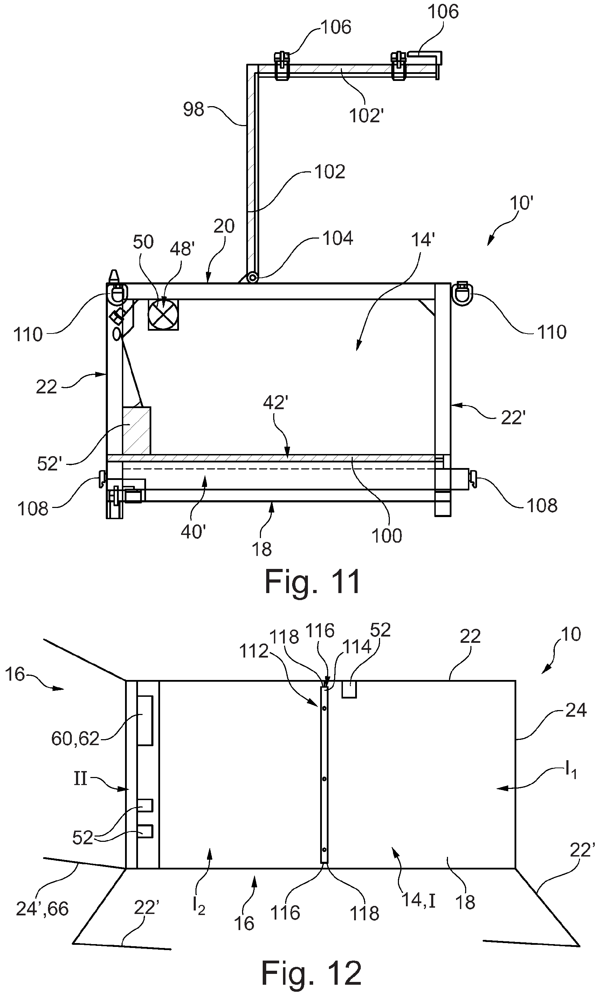

Wie Fig. 10 und 11 entnehmbar, ist unterhalb der Auflagerfläche 42' eine Auffangwanne 40' für ein in den Aufnahmebereich 14' des Behälters 10' eingeleitetes Kühl- oder Löschmittel ausgebildet. Die Auffangwanne 40' wird aus dem Behälterboden 18 und Abschnitten der senkrecht dazu verlaufenden Behälterwände 22-24' ausgebildet. Innerhalb des Behälters 10' ist eine Löscheinrichtung 52' angeordnet, die dazu eingerichtet ist, nach Aktivierung das im darin befindliche Löschmittel in den Aufnahmebereich 14' abzugeben. Die Löscheinrichtung 52' ist mit einer im Aufnahmebereich 14' angeordneten, nicht näher gezeigten Auslöseeinrichtung, wie beispielsweise einem thermisch aktivierbaren Thermoelement, signalübertragend gekoppelt.

Wie ferner aus Fig. 11 ersichtlich, ist an der Seitenwand 22' eine Entlüftungsöffnung 48' vorgesehen, über die Gase aus dem Aufnahmebereich 14 des Behälters 10' abgeführt werden können. Zudem weist der Behälter 10' an seiner vorderseitigen Seitenwand 22' einen Rohranschluss 72' zum Abführen von Kühl- oder Löschmittel aus den Aufnahmebereich 14' auf. Der als Ablass für das Kühl- und Löschmittel ausgebildete Rohranschluss 72' ist bodenseitig am Behälter 10' angeordnet. Der Rohranschluss 72' weist zudem eine Storz-Kupplung zum Anschließen von Fluidschläuchen auf.

Das den Zugang zum Aufnahmebereich 14 ausbildende Klappenteil 98 bildet vorliegend Wandbereiche der frontseitigen Seitenwand 22' und der Behälterdecke 20 am Behälter 10' aus. Das Klappenteil 98 wird insbesondere aus zwei senkrecht zueinander verlaufenden, starr miteinander verbundenen Plattenteilen 102, 102' ausgebildet. Das Klappenteil 22 ist in der vorliegend gezeigten Ausführungsform mittels eines parallel zur Behälterdecke 20 verlaufenden Schwenklager 104 aufgenommen. Das Schwenklager 104 ist auf Höhe der Behälterdecke 20 und in Tiefenrichtung des Behälters 10' etwa auf der Hälfte der Behälterdecke 20 ausgebildet.

Das Klappenteil 98 wird in der Schließposition mittels am Klappenteil 98 und zumindest an den Seitenwände 24, 24' angeordneter, miteinander korrespondierender Verriegelungsmittel 106, 106' in seiner Schließstellung gehalten.

An der Außenseite der Behälterwandung 12 (Seitenwände 22-24', bzw. Behälterdecke 20) sind ferner ein oder mehrere Verladehilfen 108, 110 zum Angreifen von Anschlag-, Lastaufnahme- oder Tragmitteln vorgesehen. Die Verladehilfe 108 ist als Anschlagöse und die Verladehilfe 110 als Verladeaufnahme ausgebildet. Die seitlich abstehenden Verladehilfen 110 (Verladeaufnahme) können als Abstandshalter zu benachbart anordenbaren Transport- oder Quarantänebehältern 10' verwendet werden.

Auch der in Fig. 10 und 11 gezeigte Quarantänebehälter 10' ist innenseitig mindestens teilweise, vorzugsweise vollständig, mit dem nicht brennbaren und zumindest hochfeuerhemmenden Verbundwerkstoff 80 ausgekleidet. In der vorliegend gezeigten Ausführung ist der Behälterboden 18, die Behälterdecke 20 und auch die Seitenwände 22, 22', 24, 24' innenseitig mit dem Verbundwerkstoff 80 ausgerüstet. Hinsichtlich der konkreten Ausgestaltung des Verbundwerkstoffs 80 wird auf die zur ersten Ausführungsform gemachten Ausführungen Bezug genommen, um unnötige Wiederholungen zu vermeiden.

Fig. 12 zeigt eine weitere Ausführungsform eines Quarantänebehälters 10, der in Bezug auf seine Behälterwandung 12 und seinen durch die Behälterwandung 12 definierten Aufnahmebereich 14 für das Gefahrgut nahezu identisch ausgeführt wird. Daher wird, um unnötige Wiederholungen zu vermeiden, in Bezug auf die grundlegende Ausgestaltung des Behälters mit seinen Behälteröffnungen 16, 16', hinsichtlich des innenseitig an der Behälterwandung mindestens teilweise angeordneten Verbundwerkstoffs sowie in Bezug auf die mittels der Trennwand erfolgenden Unterteilung in einen ersten Raum I und einen zweiten Raum II auf die obigen Ausführungen zu dem in den Fig. 1 bis 7 gezeigten Quarantänebehälter 10 verwiesen.

In der in Fig.12 gezeigten Ausführung umfasst der Quarantänebehälter 10 eine im ersten Raum I angeordnete Zwischenwand 112, mittels der der Aufnahmebereich 14 in mehrere Abteile I₁, I₂ unterteilt wird. Durch die Zwischenwand 112, welche mindestens eine Wandschicht 114 aus dem hochfeuerhemmenden Verbundwerkstoff 80 aufweist, wird dem Übergreifen eines Brandes von einem beispielsweise im Abteil I₂ gelagerten Gefahrgut auf ein im Abteil I₁ gelagertes Gefahrgut entgegengewirkt. Im Aufnahmebereich 14 des Behälters 10 kann, wie die vorliegende Ausführung verdeutlicht, in jedem Abteil I₁, I₂ eine Löscheinrichtung 52 angeordnet sein.

In der vorliegend gezeigten Ausführung ist die Zwischenwand 112 mit mindestens einer ihrer Seitenkanten 116 im Abstand zu zumindest dem Behälterboden 18, der Behälterdecke 20 und/oder einer der Seitenwände 22, 22' der Behälterwandung angeordnet. Die Zwischenwand 112 wird entlang der oder den Seitenkanten 116 über stabförmige Befestigungsmittel 118 zu den jeweiligen Wandbereichen der Behälterwandung 12 gehalten. Die Zwischenwand 112 ist mit ihrer der als Tür 30 ausgeführten Seitenwand 22' zugewandten Seitenkante 116 über die Befestigungsmittel 116 nur mit dem Behälterboden 18 und der Behälterdecke 20 verbunden.

### Bezugszeichenliste

- 10, 10': Quarantänebehälter
- 12, 12': Behälterwandung
- 14, 14': Aufnahmebereich
- 16, 16': Behälteröffnung
- 18, 18': Behälterboden
- 20: Behälterdecke
- 22, 22': Seitenwand
- 24, 24': Seitenwand
- 26: Längsseite
- 28: Stirnseite
- 30: Tür
- 32, 32': Ende
- 34, 34': Türflügel
- 36, 36': Türelement
- 38: Dichtelement
- 40, 40': Auffangwanne
- 42, 42': Auflagerfläche
- 43: Oberseite
- 44: Gitterkonstruktion
- 46: Randbereich
- 47: Stahlrahmen
- 48, 48': Entlüftungsöffnung
- 49: Oberkante
- 50, 50': Abdeckteil
- 52, 52': Löscheinrichtung
- 54: Brandmelde- und Steuereinheit
- 56, 56': Brandmeldesensor
- 57: Bewegungsmelder
- 58: Beleuchtungseinheit
- 60: Innengerät
- 62: Klimagerät
- 64: Trennwand
- 66: Tür
- 68: Außengerät
- 70: Schaltschrank
- 71: Anschluss, elektrisch
- 72, 72': Rohranschluss
- 80: Verbundwerkstoff
- 82: kontinuierliche Phase (Magnesiumzement)
- 84: Gewebe
- 86: Schaumpartikel
- 88: Randbereich
- 90: Ausklinkung
- 92: Verbindungsbereich
- 94, 94': Ober-/Unterseite
- 96: Außenflächen
- 98: Klappenteil
- 100: Gitterrost
- 102, 102': Plattenteil
- 104: Schwenklager
- 106, 106': Verriegelungsmittel
- 108, 110: Verladehilfen
- 112: Zwischenwand
- 114: Wandschicht
- 116: Seitenkante
- 118: Befestigungsmittel
- D: Materialdicke
- I: erster Raum
- I₁, I₂: Abteil
- II: zweiter Raum

## Patentansprüche

1. Quarantänebehälter (10, 10'), insbesondere Abrollbehälter, Absetzbehälter oder ISO-Container, zum Aufnehmen von brennbaren Gefahrgütern, mit
einer Behälterwandung (12, 12'), die einen Aufnahmebereich (14, 14') für das Gefahrgut definiert
wobei die Behälterwandung (12, 12') eine verschließbare Behälteröffnung (16) als Zugang zum Aufnahmebereich (14, 14') aufweist,
wobei die Behälterwandung (12, 12') innenseitig mindestens teilweise, vorzugsweise vollständig, mit einem nicht brennbaren und hochfeuerhemmenden Verbundwerkstoff (80) ausgekleidet ist,
und wobei der Verbundwerkstoff (80) folgende Komponenten umfasst:
i) eine kontinuierliche Phase (82) umfassend oder bestehend aus Magnesiumzement,
ii) ein oder mehrere mit der kontinuierlichen Phase (82) verbundene Materialien ausgewählt aus der Gruppe bestehend aus Fasern, Gewebe (84) und Schaumpartikeln (86).

2. Quarantänebehälter (10, 10') nach Anspruch 1,
wobei der Verbundwerkstoff (80) eine Materialdicke (D) im Bereich von etwa 3 mm bis 50 mm aufweist, insbesondere eine Materialdicke (D) im Bereich von etwa 4 mm bis 40 mm, bevorzugt im Bereich von etwa 5 mm bis 30 mm,
und/oder
wobei der Verbundwerkstoff (80) zusätzlich mit einem wasserabweisenden Material wie Silikon, Wachs oder einem Polymer beschichtet und/oder imprägniert ist.

3. Quarantänebehälter (10, 10') nach Anspruch 1 oder 2,
wobei der Magnesiumzement die folgenden Magnesiumverbindungen umfasst oder aus den folgenden Magnesiumverbindungen besteht:
- Magnesiumoxid und/oder Magnesiumcarbonat und/oder Magnesiumhydroxid, und
- eines oder mehrere weitere Magnesiumsalze, vorzugsweise ausgewählt aus der Gruppe bestehend aus Magnesiumsulfat, Magnesiumnitrat, Magnesiumchlorid, Magnesiumiodid und Magnesiumbromid, besonders bevorzugt ausgewählt aus der Gruppe bestehend aus Magnesiumsulfat und Magnesiumnitrat.

4. Quarantänebehälter (10, 10') nach einem der vorstehenden Ansprüche,
wobei der Magnesiumzement ein Magnesiumsulfatzement ist, in welchem das eine weitere Magnesiumsalz Magnesiumsulfat ist, wobei der Magnesiumsulfatzement vorzugsweise aus Magnesiumoxid und Magnesiumsulfat besteht, wobei vorzugsweise der Magnesiumzement im Wesentlichen frei von Chlorid Ionen ist.

5. Quarantänebehälter (10, 10') nach einem der vorstehenden Ansprüche,
wobei der Verbundwerkstoff (80) folgende mit der kontinuierlichen Phase (82) verbundene Materialien umfasst: Fasern, Gewebe (84) und Schaumpartikel (86), wobei die Schaumstoffpartikel (86) vorzugsweise 30% bis 70% vom Gesamtvolumen des Verbundwerkstoffs (80) ausmachen.

6. Quarantänebehälter (10, 10') nach einem der vorstehenden Ansprüche,
wobei die Fasern und/oder die Schaumpartikel (86) innerhalb des Verbundwerkstoffs (80) räumlich gleichmäßig (isotrop) verteilt sind und das Gewebe (84) an zwei gegenüberliegenden Außenflächen (96) des Verbundwerkstoffs (80) vollflächig eingearbeitet ist, und/oder
wobei die Fasern Naturfasern sind, bevorzugt Pflanzenfasern sind, besonders bevorzugt Bambusfasern sind,
und/oder
wobei das Gewebe (84) aus einem oder mehreren synthetischen Materialien besteht, bevorzugt aus Polyesterfasern, Nylonfasern, Acrylfasern, Glasfasern oder deren Mischungen besteht, besonders bevorzugt ist das Gewebe (84) ein Glasfasergewebe.

7. Quarantänebehälter (10, 10') nach einem der vorstehenden Ansprüche,
wobei die Schaumpartikel (86) aus einem oder mehreren aufgeschäumten Polymeren bestehen, bevorzugt aus expandiertem Polystyrol (EPS) und/oder aus extrudiertem Polystyrol (XPS) bestehen, besonders bevorzugt aus expandiertem Polystyrol (EPS) bestehen und/oder wobei die Schaumpartikel (86) eine sphärische Form mit einem durchschnittlichen Partikeldurchmesser im Bereich von 1 mm bis 3 mm aufweisen.

8. Quarantänebehälter (10) nach einem der vorstehenden Ansprüche,
wobei die Behälteröffnung (16) an einer Längsseite (26) des Behälters (10) ausgebildet und durch eine schwenkbar daran angeordnete Tür (30), vorzugsweise abdichtend, verschließbar ist, wobei vorzugsweise die Tür (30, 66) mehrere Türflügel (34, 34') aufweist, wobei weiter vorzugsweise wenigstens einer der Türflügel (34, 34') aus mehreren Türelementen (36, 36') ausgebildet ist, welche schwenkbar untereinander verbunden sind.

9. Quarantänebehälter (10) nach einem der vorstehenden Ansprüche,
wobei die Behälteröffnung (16) und/oder die Tür (30, 66) mit einem Dichtelement (38) für eine fluiddichte Ausgestaltung der Behälteröffnung (16) ausgerüstet ist/sind.

10. Quarantänebehälter (10) nach einem der vorstehenden Ansprüche,
wobei der Behälterboden (18) mit einer Auffangwanne (40) zum Aufnehmen von Bindemittel und/oder Flüssigkeiten ausgerüstet ist, wobei vorzugsweise die Auffangwanne (40) zumindest Bereiche einer Auflagerfläche (42) für das Gefahrgut im Aufnahmebereich (14) definiert,
wobei vorzugsweise die Auffangwanne (40) oberhalb des Behälterbodens (18), der zumindest teilweise mit dem Verbundwerkstoff (80) ausgerüstet ist, angeordnet oder die Auffangwanne (40) mindestens teilweise durch Bereiche des Behälterbodens (18) ausgebildet ist, und/oder die Auffangwanne (40) an ihrer Oberseite (43) eine Gitterkonstruktion (44) als Auflagerfläche (42) aufweist.

11. Quarantänebehälter (10) nach einem der vorstehenden Ansprüche,
wobei der Behälterboden (18) einen die seitlichen Abmessungen begrenzenden Stahlrahmen (47) aufweist, in den ein oder mehrere Holzplatten als eine untere Lage eingelegt und eine die Oberseite der unteren Lage im Wesentlichen vollflächig abdeckende Decklage aus dem Verbundwerkstoff (80) angeordnet ist,
und/oder
wobei an der Behälterwandung (12, 12'), vorzugsweise einer Seitenwand (22-24') oder einer Tür (30, 66), mindestens eine Entlüftungsöffnung (48, 48') ausgebildet ist, wobei vorzugsweise die Entlüftungsöffnung (48, 48') im Eintritts- und Austrittsbereich jeweils mit einem luftdurchlässigen Abdeckteil (50, 50') versehen ist und innerhalb des Durchtrittsbereichs der Entlüftungsöffnung (48) ein Filtermaterial angeordnet ist.

12. Quarantänebehälter (10, 10') nach einem der vorstehenden Ansprüche,
mit einer im Aufnahmebereich (14, 14') angeordneten Löscheinrichtung (52, 52'), vorzugsweise einer Aerosol-Löschanlage, und mindestens einer mit der Löscheinrichtung (52, 52') signalübertragend verbundenen Brandmelde- und Steuereinheit (54) mit zumindest einem Brandmelde-Sensor (56, 56'), wobei vorzugsweise ein oder mehrere im Aufnahmebereich (14, 14') angeordnete Komponenten der Brandmelde- und Steuereinheit (54) mittels einer beliebig reversibel koppel- und entkoppelbaren Verbindung mit einer Rahmenstruktur des Behälters (10, 10') koppelbar sind.

13. Quarantänebehälter (10) nach einem der vorstehenden Ansprüche,
wobei der Aufnahmebereich (14) ein erster Raum (I) innerhalb des Behälters (10) ist und zusätzlich ein zweiter Raum (II) im Behälter (10) ausgebildet ist, wobei der erste Raum (I) und der zweite Raum (II) durch eine Trennwand (64) voneinander getrennt sind, wobei vorzugsweise der zweite Raum (II) über mindestens eine weitere Behälteröffnung (16') an einer die Stirnseite (28) des Behälters (10) definierenden Seitenwand (24') aus zugänglich ist.

14. Quarantänebehälter (10) nach Anspruch 13,
wobei die Trennwand (64) hochfeuerhemmend ausgeführt ist,
und/oder im zweiten Raum (II) mindestens eine der nachfolgenden Komponenten angeordnet ist:
- ein Schaltschrank (70);
- eine Brandmelde- und Steuereinheit (54);
- zumindest ein Außengerät (68) eines Klimageräts (62) sowie das Außengerät (68) mit dem im Aufnahmebereich (14) angeordneten Innengerät (60) verbindende Leitungsabschnitte;
- eine Stromversorgung;
- ein oder mehrere Anschlüsse (71) für eine externe Stromversorgung, und
- ein Rohranschluss (72) mit einem sich durch die Trennwand (64) erstreckenden Rohrabschnitt.

15. Quarantänebehälter (10) nach einem der vorstehenden Ansprüche,
wobei im ersten Raum (I) des Behälters (10) mindestens eine den Aufnahmebereich (14) in mehrere Abteile (I₁, I₂) unterteilende Zwischenwand (112) angeordnet ist, wobei vorzugsweise die Zwischenwand (112) mindestens eine Wandschicht (114) aufweist, welche aus dem hochfeuerhemmenden Verbundwerkstoff (80) ausgeführt ist,
wobei vorzugsweise die Zwischenwand (112) entlang mindestens einer ihrer Seitenkanten (116) mit Abstand zum Behälterboden (18), der Behälterdecke (20) und/oder den Seitenwänden (22, 22') der Behälterwandung (12) angeordnet ist.
